Europäisches Patentamt

European Patent Office

Office européen des brevets

(19)

(11) Numéro de publication : **0 520 857 A1**

(12) # DEMANDE DE BREVET EUROPEEN

(21) Numéro de dépôt : **92401665.2**

(22) Date de dépôt : **16.06.92**

(51) Int. Cl.⁵ : **H04N 5/38, H01P 1/213**

(30) Priorité : **25.06.91 FR 9107799**

(43) Date de publication de la demande :
**30.12.92 Bulletin 92/53**

(84) Etats contractants désignés :
**AT BE CH DE DK ES FR GB GR IT LI LU NL SE**

(71) Demandeur : **THOMSON-LGT LABORATOIRE
GENERAL DES TELECOMMUNICATIONS
1, rue de l'Hautil
F-78700 Conflans-Sainte Honorine (FR)**

(72) Inventeur : **Turin, Michel
THOMSON-CSF, SCPI, Cédex 67
F-92045 Paris la Défense (FR)**

(74) Mandataire : **Courtellemont, Alain et al
THOMSON-CSF SCP B.P. 329
F-92402 COURBEVOIE CEDEX (FR)**

(54) **Dispositif de diplexage associé à des moyens de couplage d'énergies, en particulier pour émetteur de télévision.**

(57) L'invention concerne à la fois les diplexeurs de signaux et les moyens de couplage des énergies provenant de sources qui fournissent des signaux en phase et de même amplitude.

Les moyens de couplage des énergies et le diplexeur ne sont pas montés en série mais imbriqués. Ceci est obtenu en disposant deux filtres (F1, F2) sur les entrées de la jonction de sortie (B) des moyens de couplage (E1-En, Rd1-Rdn, D1-Dn, C1, C2, B) d'un premier signal (I) et en appliquant un second signal (S) sur la jonction de sortie (B) des moyens de couplage de manière à le faire réfléchir par les deux filtres qui sont réjecteurs pour ce second signal et passants pour le premier signal (I).

Application, en particulier, dans les émetteurs de télévision.

FIG.2

EP 0 520 857 A1

La présente invention concerne un dispositif de diplexage dont l'une au moins des deux voies d'entrée est associée à des moyens de couplage d'énergies.

Il est connu d'utiliser des dispositifs de diplexage, en particulier dans les émetteurs de télévision, pour coupler deux émetteurs à une même antenne tout en évitant des réactions entre ces émetteurs

Il est également connu, en particulier dans le domaine des émetteurs de télévision, d'employer des moyens de couplage d'énergies afin de fournir, en phase, à un même utilisateur, l'énergie provenant de plusieurs sources. Dans le cas où les moyens de couplage se trouvent en série avec l'une des deux voies d'accès du diplexeur, les affaiblissements dus aux moyens de couplage et à la voie concernée, dans le diplexeur, s'ajoutent.

La présente invention a pour but de réduire le trajet des signaux entre les sources en phase et la sortie du diplexeur avec, pour conséquences, une réduction des affaiblissements et une réduction du prix du matériel.

Ceci est obtenu en imbriquant dans un même dispositif, défini dans la revendication 1, les fonctions de couplage d'énergies et de diplexage de signaux, de telle manière que certains éléments du dispositif participent aux deux fonctions.

La présente invention sera mieux comprise et d'autres caractéristiques apparaîtront à l'aide de la description ci-après et des figures s'y rapportant qui représentent :

- la figure 1 des moyens de couplage d'énergies selon l'art connu,
- la figure 2 un dispositif selon l'invention.

Sur les figures les éléments correspondants sont désignés jar les mêmes repères.

Dans la description qui va suivre ainsi que dans les revendications il est question de jonctions hybrides à 3dB, à 90°, comportant deux paires d'accès conjugués. Il faut entendre par paire d'accès conjugués de la jonction, deux des quatre accès de la jonction tels que, si des charges adaptées y sont branchées, il n'y a pratiquement pas de couplage entre les deux autres accès du circuit, les deux autres accès constituant d'ailleurs également une paire d'accès conjugués ; et, toujours quand des charges adaptées sont branchées sur l'une des paires d'accès conjugués, la puissance appliquée sur l'un des deux accès conjugués de l'autre paire ressort par les accès de la paire sur laquelle sont branchées des charges adaptées, à égalité de puissance mais avec des ondes en quadrature de phase. Sur les schémas les paires d'accès conjugués des jonctions hybrides à 3dB, à 90°, seront repérées respectivement 1-2 et 3-4 ; ces jonctions sont des coupleurs directifs dans les montages qui ont servi d'exemples à la présente description, mais il est à noter que ces jonctions peuvent, sans sortir du cadre de l'invention, être constituées par toutes autres jonctions équivalentes telles que, par exemple, des tés magiques ou des anneaux hybrides associés à des éléments de déphasage de valeur convenable.

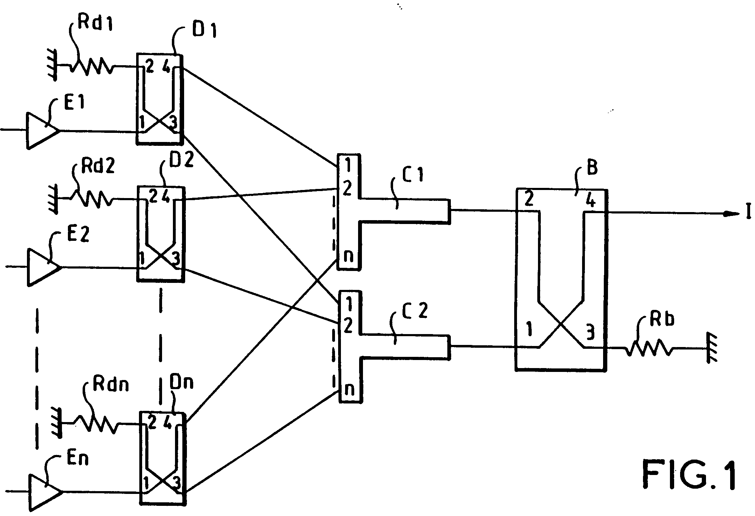

La figure 1 montre le schéma de moyens de couplage d'énergies selon l'art connu. Ces moyens permettent de fournir un signal I avec la somme, aux pertes près, des énergies fournies par n amplificateurs, E1 à En ; il est à noter que le fonctionnement correct du montage selon la figure 1 nécessite que les signaux délivrés par les amplificateurs E1 à En soient équipotentiels et équiphases. Les sorties des amplificateurs E1 à En sont respectivement reliées aux accès 1 de n jonctions hybriques à 3dB, à 90°, D1 à Dn. Entre les accès 2 des jonctions D1 à Dn et la masse, sont montées des résistances d'équilibrage Rd1 à Rdn qui constituent des charges adaptées. Les accès 4 des jonctions D1 à Dn sont respectivement reliés aux entrées 1 à n d'une boîte de distribution C1 à n entrées et une sortie ; de même les accès 3 des jonctions D1 à Dn sont respectivement reliés aux entrées 1 à n d'une boîte de distribution C2 à n entrées et une sortie. Les sorties des boîtes de distribution C1, C2 sont respectivement reliées aux accès 1 et 2 d'une jonction hybride à 3dB, à 90°, B, dont l'accès 3 est relié à la masse par une résistance d'équilibrage Rb et dont l'accès 4 fournit le signal I.

Dans l'exemple décrit n est égal à 8, les amplificateurs ont chacun une puissance de sortie de 1 kilowatt et le signal I est un signal image de télévision. Ce signal image I traverse un diplexeur, non représenté, avant d'être émis par une antenne, non représentée ; le diplexeur reçoit égalememt un signal son de télévision qu'il envoie aussi vers l'antenne.

Le diplexeur dont une voie d'entrée est mise en série, de façon classique, derrière l'accès 4 de la jonction B du montage selon la figure 1, peut être constitué par deux jonctions hybrides à 3dB, à 90° couplées en série par deux filtres de réjection. La première voie d'entrée du diplexeur passe par la première jonction et aboutit dans la seconde jonction et la seconde voie d'entrée passe par l'un des deux accès de la seconde jonction qui ne sont pas reliés à un des deux filtres de réjection, l'autre de ces deux accès constituant la sortie du diplexeur. Le premier signal à diplexer est appliqué, par exemple, sur l'accès 1 de la première jonction et traverse les deux filtres puis la seconde jonction pour ressortir par l'accès 4 de la seconde jonction tandis que le second signal à diplexer est appliqué sur l'accès 3 de la seconde jonction, est réfléchi par les deux filtres et ressort de la seconde jonction par l'accès 4 c'est-à-dire par la sortie du diplexeur.

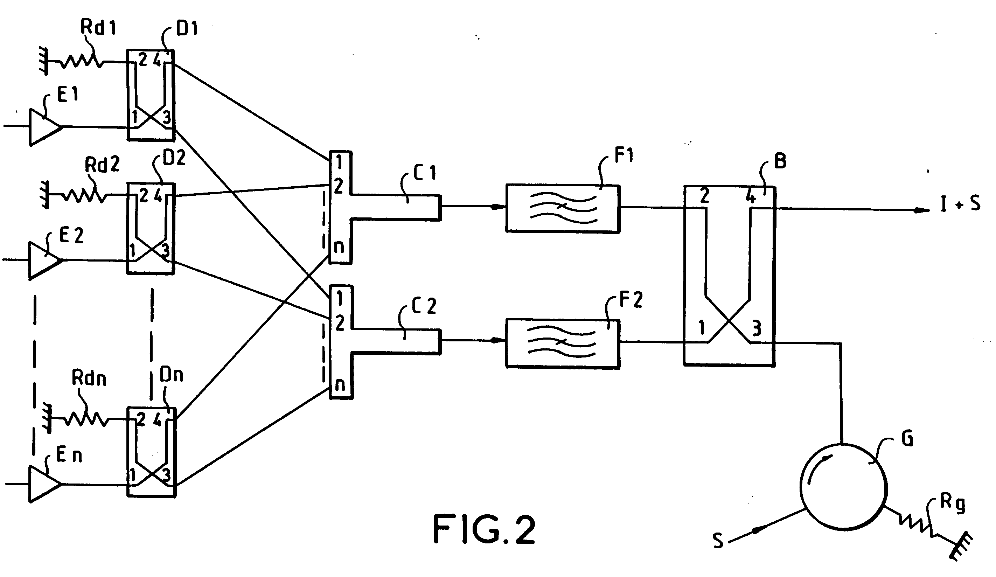

La figure 2 montre comment au lieu de disposer la première voie d'entrée d'un diplexeur en série derrière l'accès 4 de la jonction B du montage selon la figure 1, il est possible d'imbriquer le diplexeur et les moyens de couplage d'énergies en évitant l'utilisation de deux jonctions hybrides supplémentaires et donc les affaiblissements qu'elles entraînent. Pour cela, dans la première voie d'entrée, deux filtres de réjection F1,F2 sont insérés respectivement dans les deux liaisons entre les boîtes de distribution C1 et C2 et la jonction B et un signal, S, contenu dans une bande de fréquences entièrement distincte de celle du signal I, est appliqué sur l'accès 3 de la jonction B, c'est-à-dire sur la seconde voie d'entrée du diplexeur. Les filtres F1, F2, sont des filtres coupe-bande identiques qui laissent passer les signaux aux fréquences de la bande de fréquences du signal I provenant des amplificateurs E1 à En mais rejettent les signaux aux fréquences de la bande de fréquences du signal S. Ainsi les signaux I et S apparaissent sur l'accès 4 de la jonction B.

Dans l'exemple qui a servi à la description selon la figure 2, le signal I, qui provient de la première voie d'entrée du diplexeur, est un signal image de télévision et le signal S, qui provient de la seconde voie d'entrée du diplexeur, est un signal son de télévision.

Dans le montage selon la figure 2, une protection est prévue contre les résidus du signal provenant des amplificateurs E1 à En qui pourraient apparaître sur la sortie 3 de la jonction B, et donc perturber le générateur, non représenté, du signal S ; cette protection est constituée par un circulateur, G, à trois accès dont le premier accès est relié au générateur qui fournit le signal S, dont le deuxième accès est réuni à l'accès 3 de la jonction B et dont le troisième accès est relié à la masse par une charge adaptée, Rg, qui permet de dissiper les résidus du signal provenant des amplificateurs E1 à En.

Il est à noter que le signal S peut provenir de moyens de couplage d'énergies du type, par exemple, de ceux qui ont été décrits à l'aide de la figure 1.

## Revendications

1. Dispositif de diplexage comportant une première voie pour coupler des énergies provenant de n sources (E1-En), avec n entier supérieur à 1, une seconde voie et un circuit de sortie (B) constitué par une jonction hybride à 3dB, à 90°, dont chaque accès de la première paire d'accès conjugués est couplé aux n sources par la première voie et dont les deux accès de la seconde paire d'accès conjugués sont respectivement couplés à la seconde voie et à la sortie du dispositif, caractérisé par une interpénétration des fonctions de diplexage et de couplage d'énergies, la première voie comportant pour cela : n circuits d'entrée (D1-Dn) constitués par n jonctions hybrides à 3dB, à 90°, dont les premiers accès des premières paires sont respectivement couplés aux n sources, deux boîtes de distribution (C1, C2) à n entrées et une sortie, les n entrées d'une des deux boîtes étant respectivement reliées aux n premiers accès des secondes paires d'accès conjugués des n circuits d'entrée et les n entrées de l'autre boîte aux n seconds accès des secondes paires d'accès conjugués des n circuits d'entrée, et deux filtres identiques (F1, F2) pour coupler respectivement les sorties des deux boîtes de distributions (C1, C2) aux deux accès de la première paire d'accès conjugués du circuit de sortie (B).

2. Dispositif selon la revendication 1, caractérisé en ce qu'il comporte un circulateur (G) dans sa seconde voie.

3. Emetteur de télévision, caractérisé en ce qu'il comporte un dispositif selon l'une des revendications précédentes.

FIG.1

FIG.2

Office européen
des brevets

**RAPPORT DE RECHERCHE EUROPEENNE**

Numero de la demande

EP    92 40 1665

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4 723 307 (CLARK ET AL.) <br> * colonne 12, ligne 65 - colonne 13, ligne 9; figure 6 * <br> --- | 1,3 | H04N5/38 <br> H01P1/213 |
| A | EP-A-0 421 036 (THE MARCONI COMPANY LIMITED) <br> * colonne 1, ligne 50 - colonne 2, ligne 13; figures 1A-1B * <br> * colonne 4, ligne 53 - colonne 5, ligne 47; figures 3-4 * <br> --- | 1-3 | |
| A | Symposium Record Broadcast Sessions <br> 16th International TV Symposium Montreux, Switzerland; 17-22 June 1989, pages 205-224; N. S. Ostroff et al.:'Klystrode Equipped UHF Transmitters for Full Time Broadcast Service' <br> * page 210, ligne 13 - ligne 19; figure 3 * <br> ----- | 1-3 | |

**DOMAINES TECHNIQUES RECHERCHES (Int. Cl.5 )**

H04N
H01P

Le présent rapport a été établi pour toutes les revendications

| Lieu de la recherche | Date d'achèvement de la recherche | Examinateur |
|---|---|---|
| LA HAYE | 14 SEPTEMBRE 1992 | SCHINNERL A. |